# EUROPÄISCHE PATENTSCHRIFT

(11) **EP 0 908 569 B1**
(45) Veröffentlichungstag und Bekanntmachung des Hinweises auf die Patenterteilung: **02.01.2003**
(21) Anmeldenummer: 98118810.5
(22) Anmeldetag: 05.10.1998
(51) Int. Cl.: E03F 5/14

(54) **Siebvorrichtung für in einem Zulaufrohr ankommendes Abwasser**
Screening device for sewage in an inlet pipe
Dispositif de tamisage pour eaux usées dans une canalisation

(30) Priorität: 09.10.1997 DE 19744524
(43) Veröffentlichungstag der Anmeldung: 14.04.1999
(73) Patentinhaber: Hans Huber AG Maschinen- und Anlagenbau, D-92334 Berching (DE)
(72) Erfinder: Frommann, Christian, 92364 Deining (DE); Schreiber, Thomas, 92342 Freystadt (DE)
(74) Vertreter: Patentanwälte Rehberg + Hüppe

(56) Entgegenhaltungen:
- EP-A- 0 594 167
- DD-A- 105 189
- DE-A- 3 941 673
- DE-U- 29 511 462

## Beschreibung

Die Erfindung bezieht sich auf eine Siebvorrichtung, insbesondere für den Einbau in Pumpschächten, mit einem Anschluss für in einem Zulaufrohr ankommendes Abwasser, mit einer über den Umfang gehäuseartig geschlossenen zylindrischen Siebfläche zum Abscheiden von Abscheidegut, die über den Zylinderumfang verteilt angeordnete Öffnungen aufweist, sowie mit einer Einrichtung zum Herausfördern des Abscheidegutes nach oben in Form einer mit in Gebrauchsstellung vertikaler Achse angeordneten Schneckenfördereinrichtung mit einer über einen Motor angetriebenen Welle, einer darauf angeordneten Förderwendel und einem rohrförmigen Gehäuse, an das die zylindrische Siebfläche dichtend angeschlossen ist. Die Erfindung lässt sich insbesondere an Zulaufbauwerken realisieren, kann aber auch in anderem Zusammenhang eingesetzt werden, beispielsweise in Pumpenschächten oder tiefer gelegenen Kanälen. Auch oberirdisch kann die Siebvorrichtung, z. B. als Behälterversion, eingesetzt werden. Zulaufbauwerke dienen dazu, die Flüssigkeit, also das Abwasser, anzuheben, um es dann wieder mit natürlichem Gefälle der Kläranlage zuzuführen. Das Anheben der Flüssigkeit geschieht durch eine Pumpe mit entsprechender nachgeschalteter Leitung, die in einem Pumpensumpf des Zulaufbauwerkes angeordnet ist. In solchen Zulaufbauwerken ist oft wenig Platz vorhanden, d. h. die Zulaufbauwerke sind als Schächte mit entsprechender Höhe, jedoch mit relativ kleiner Grundfläche ausgestattet. Trotz dieser beengten Verhältnisse ist es erforderlich, die mit Abscheidegut beladene Flüssigkeit zu sieben, also das Abscheidegut abzuscheiden und herauszuholen, damit es nicht in die Pumpe gelangt.

Eine Siebvorrichtung mit den eingangs beschriebenen Merkmalen ist aus der DE 44 12 679 C2 bekannt. Die Siebfläche der Siebvorrichtung ist ortsfest mit dem Zulaufrohr verbunden und gehäuseartig ausgebildet. Die Einrichtung zum Herausfördern des Abscheidegutes aus dem Zulaufbauwerk ist als Schneckenfördereinrichtung mit einem rohrförmigen Gehäuse und einer angetriebenen Förderschnecke ausgebildet, die eine erste, etwa horizontal verlaufende Förderstrecke und eine zweite, etwa vertikal verlaufende Förderstrecke aufweist. Damit wird gleichzeitig das Abwasser gesiebt und das abgeschiedene Abscheidegut aus dem Zulaufbauwerk herausgefördert. Diese kombinierte Sieb- und Fördereinrichtung ist ortsfest vorgesehen und mit dem Zulaufrohr verbunden, so dass eine Zwangsdurchströmung der Siebfläche stattfindet. Da die Siebfläche durch die Förderschnecke jedoch immer wieder gereinigt wird, besteht keine Verstopfungsgefahr für die Siebfläche, so dass diese ihre Siebfunktion immer erfüllen kann. Fällt mehr Abscheidegut an, dann wird auch mehr Abscheidegut abgeschieden und aus dem Zulaufbauwerk herausgefördert. Es gibt keine Zeiten, in denen die Flüssigkeit ungesiebt der Pumpe zulaufen kann. Die Siebfläche ist Bestandteil des Gehäuses der Schneckenfördereinrichtung. Das Gehäuse der Schneckenfördereinrichtung ist ansonsten rohrförmig ausgebildet. Die Schneckenfördereinrichtung weist die erste, etwa horizontal verlaufende Förderstrecke auf, in deren Bereich die Siebwandung angeordnet ist. Hier findet die Siebung statt. Die zweite, etwa vertikal angeordnete Förderstrecke sorgt im wesentlichen für das Herausfördern des abgeschiedenen Abscheidegutes aus dem Zulaufbauwerk. Die zweite Förderstrecke kann in einem Auswurfbogen, einer Schurre o. dgl. enden, über die das abgeschiedene und herausgeförderte Abscheidegut beispielsweise in einen Container oder einen anderen Behälter abgeworfen wird. Durch die Anordnung der beiden Förderstrecken in einem rechten Winkel zueinander entsteht eine relativ große Baubreite. Die Förderschnecke der Schneckenfördereinrichtung kann kontinuierlich oder diskontinuierlich betrieben werden. Beispielsweise ist es möglich, hier regelmäßige Betriebsintervalle vorzusehen, um eine gewisse Belegung der Siebfläche mit Abscheidegut und die dadurch verursachte erhöhte Filterwirkung in diesem Bereich auszunutzen. Freilich muss die Siebfläche in entsprechenden Intervallen immer wieder freigeräumt werden, damit letztlich eine Verstopfung und ein völliges Zusetzen der Siebfläche vermieden wird.

Die EP 0 594 167 A1 zeigt und beschreibt eine Vorrichtung zum Entfernen von Rechen- und oder Siebgut aus in einem Gerinne strömender Flüssigkeit. Das Gerinne ist nach oben offen und hat damit Anschluss an die Atmosphäre. In der Regel liegen keine beengten Einbauverhältnisse vor. Die Abscheidefläche für das Abscheidegut in der Flüssigkeit im Gerinne besteht aus einem Rost, Sieb o. dgl., der sich über den gesamten zylindrischen Umfang erstreckt, also über den Umfang gehäuseartig geschlossen ist. Die Durchströmung der Abscheidefläche unterhalb des Wasserspiegels ist durch eine stirnseitige Öffnung gewährleistet. Die Achse der Abscheidefläche und die Achse einer sich anschließenden Fördereinrichtung mit Welle Förderschnecke und Gehäuse sind zwar fluchtend zueinander vorgesehen, jedoch ist die gesamte Vorrichtung mit ihrer Achse immer in einem Winkel schräg in das Gerinne eingestellt. Diese Vorrichtung lässt sich nicht mit gemeinsamer senkrechter Achse anwenden, weil die stirnseitige Einströmöffnung einen solchen Einsatz verbietet.

Aus der DD 105 189 A ist eine Vorrichtung zum Auffangen und Entfernen von Grobstoffen aus Flüssigkeiten, insbesondere Abwasser, bekannt, die eine sich etwa über 180° erstreckende Abscheidefläche aufweist. Die Abscheidefläche geht in ein Gehäuse einer Schneckenfördereinrichtung über, die eine auch über die Abscheidefläche durchgehende Welle mit senkrecht abstehender Förderwendel besitzt. Die Vorrichtung ist mit ihrer Achse geneigt oder senkrecht in ein Gerinne eingestellt. Insbesondere bei senkrechter Anordnung besteht die Gefahr, dass auf der Förderwendel aufliegendes Abscheidegut nicht aufwärts gefördert wird, sondern entweder liegen bleibt oder in das Gerinne zurückfällt.

Die Erfindung geht von der oben geschilderten Problematik aus und zielt darauf ab, eine Siebvorrichtung zu schaffen, mit der das Abwasser auch bei beengten Einbauverhältnissen gesiebt und das Abscheidegut aus der Flüssigkeit herausgefördert wird.

Erfindungsgemäß wird dies bei der Siebvorrichtung der eingangs beschriebenen Art dadurch erreicht, dass die Siebfläche mit ihrer Achse fluchtend zu der vertikal angeordneten Achse der Schneckenfördereinrichtung angeordnet ist, dass die Siebvorrichtung einen der zylindrischen Siebfläche vorgeschalteten Beschickungsbehälter aufweist, der mit seinem Anschluss sowohl an das Ende des Zulaufrohres anschließbar ist als auch an eine Durchbrechung der Siebfläche angeschlossen ist, die im unteren Bereich der Siebfläche in radialer Richtung oder stirnseitig in axialer Richtung der Siebfläche angeordnet ist, dass in Gebrauchsstellung der Anschluss zwischen dem Zulaufrohr und dem Beschickungsbehälter höher angeordnet ist als der Anschluss zwischen dem Beschickungsbehälter und der Siebfläche, und dass der Beschickungsbehälter eine Verbindung zur Atmosphäre besitzt, so dass im normalen Betrieb einerseits eine Höhendifferenz zwischen dem Zulaufrohr und dem maximalen Wasserspiegel in dem Beschikkungsbehälter bereitgestellt wird und andererseits ein freier Auslauf der Flüssigkeit des Abwassers durch die Siebfläche aufgrund eines natürlichen Gefälles ermöglicht wird und die Durchbrechung zumindest von Zeit zu Zeit immer wieder überströmt und so das Abwasser mit dem Abscheidegut in die über den Umfang gehäuseartig geschlossene Siebfläche eingeschwemmt wird.

Die Erfindung geht von dem Gedanken aus, die Siebvorrichtung einerseits und die Schneckenfördereinrichtung andererseits nicht mehr im rechten Winkel zueinander, sondern mit vertikal angeordneten Achsen fluchtend übereinander anzuordnen. Dadurch entsteht eine extrem kleine Baubreite, und die Baueinheit wird auch dann anwendbar, wenn sehr beengte Einbauverhältnisse vorliegen. Die Baueinheit erfordert nur noch einen einzigen Antrieb, insbesondere einen Motor, der oben auf die Schneckenfördereinrichtung aufsetzbar ist. Darüber hinaus werden aber auch die Schneckenfördereinrichtung einerseits und die Siebvorrichtung andererseits konstruktiv derart miteinander verbunden, dass auch die Siebfläche von der durchgehenden Schneckenwendel der Schneckenfördereinrichtung immer wieder gereinigt wird, wobei das abgeschiedene Abscheidegut nach oben ausgetragen wird. Die über den Umfang mit Ausnahme der Öffnungen gehäuseartig geschlossene zylindrische Siebfläche muss im unteren Bereich eine Durchbrechung aufweisen, durch die das Abwasser in die Vorrichtung gelangt. Es ist eine vorgeschalteter Beschickungsbehälter vorgesehen, der rohrförmig mit entspechend geformter Gestalt oder als kastenartiger Behälter ausgebildet sein kann. Der Beschickungsbehälter ist an die im unteren Bereich angeordnete Durchbrechung der Siebfläche so angeschlossen, dass die Durchbrechung zumindest von Zeit zu Zeit immer wieder überströmt wird. Da das Abwasser durch die Öffnungen in der Siebfläche austritt, schwemmt die dann anstehende Säule des Abwassers das Abscheidegut in den von der Siebfläche umschlossenen Raum hinein, so dass es dort von der Schneckenfördereinrichtung erfasst und nach oben gefördert wird. Das vollständige Überströmen der Durchbrechung kann durch die Einbausituation, z.B. durch entsprechendes Gefälle des Zulaufrohres, oder aber auch durch eine entsprechende Steuerung der Siebvorrichtung erreicht werden.

Wichtig ist in diesem Zusammenhang die Anordnung des Beschickungsbehälters, der der Durchbrechung der Siebfläche vorgeschaltet ist und der im normalen Betrieb einerseits eine Höhendifferenz zwischen dem Zulaufrohr und dem maximalen Wasserspiegel in dem Beschickungsbehälter und andererseits einen freien Auslauf der Flüssigkeit des Abwassers durch die Siebfläche bereitstellt. Das zu siebende Abwasser wird der Baueinheit aus Siebfläche und Schneckenfördereinrichtung über diesen Beschickungsbehälter zugeleitet. Dieser Beschickungsbehälter erfüllt zwei Aufgaben. Er stellt einerseits eine Höhendifferenz bereit und vermeidet damit einen Rückstau des Abwassers in dem Zulaufrohr. Unter einer Höhendifferenz wird die Differenz zwischen der Sohle des Zulaufrohres und dem maximalen Wasserspiegel in dem Beschickungsbehälter verstanden. Um diese positive Differenz immer aufrecht zu erhalten, kann der Beschickungsbehälter mit einer Sonde versehen sein, die sich auf der Höhe des maximal vorgesehenen Wasserspiegels befindet und über die der Motor der Schneckenfördereinrichtung eingeschaltet wird, sobald der Wasserspiegel im Beschickungsbehälter diese Stelle erreicht. Dieser Zustand geht einher mit einer entsprechenden Belegung der Siebfläche, wobei das Abscheidegut nach dem Einschalten des Antriebes der Schneckenfördereinrichtung von der Siebfläche abgenommen und diese dadurch wiederum vermehrt durchgängig für Flüssigkeit wird, so dass der Wasserspiegel im Beschickungsbehälter fällt. Dies kann dann wiederum als Steuersignal für ein Ausschalten des Antriebes der Schneckenfördereinrichtung genutzt werden. Der Beschickungsbehälter erfüllt darüber hinaus aber auch noch eine zweite Funktion. Er muss so ausgebildet und angeschlossen sein, dass er das zu siebende Abwasser dem Innern der Baueinheit aus Siebfläche und Schneckenfördereinrichtung durch eine U-förmige Verbindung über die Durchbrechung drucklos zuführt, so dass die Flüssigkeit durch die Öffnungen in der Siebfläche hindurchtreten und beispielsweise in einen Pumpensumpf oder einen die Siebeinrichtung umschließenden Auffangbehälter aufgrund des natürlichen Gefälles gelangen kann, aus dem heraus die Flüssigkeit dann wieder abgezogen wird. Zu diesem Zweck ist der Beschickungsbehälter oben, d. h. oberhalb des maximal vorgesehenen Wasserspiegels, offen gestaltet und besitzt hier eine Verbindung zur Atmosphäre, so dass sich der Atmosphärendruck als Antrieb für die Überführung des Abwassers aus dem Beschickungsbehälter in das Innere der Siebfläche auswirken kann. Der Beschickungsbehälter kann kastenförmig oder aber auch als Rohrverbindung mit entsprechenden Krümmern ausgebildet sein.

Die Welle und die Förderwendel der Schneckenfördereinrichtung können auch innerhalb der zylindrischen Siebfläche ganz oder teilweise durchgehend vorgesehen sein. Es ist möglich, in diesem Bereich eine wellenlose Förderwendel einzusetzen, bzw. die Welle der Förderwendel weiter oben als die Förderwendel enden zu lassen. Die Gestaltung sollte auf die Einbausituation hinsichtlich der Überströmung der Durchbrechung abgestimmt sein.

Die Förderwendel kann im Bereich der zylindrischen Siebfläche außen mit einer Bürste oder einer Leiste versehen sein. Diese Bürste oder Leiste befindet sich also am radial äußeren Umfang der Förderwendel und streicht ihrerseits an der inneren Oberfläche der Siebfläche beim Antrieb der Förderwendel entlang, so dass das dort festgesetzte Abscheidegut ergriffen und die Siebfläche immer wieder gesäubert wird. Solche Bürsten oder Leisten lassen sich leicht auswechseln, wenn ein entsprechender Verschleiß vorliegt.

Für den Anschluss bzw. die Verbindung zwischen Beschickungsbehälter und dem Innenraum der Siebfläche der Baueinheit ergeben sich verschiedene Möglichkeiten. In einer ersten Ausführungsform ist vorgesehen, dass der Beschickungsbehälter radial an die zylindrische Siebfläche angeschlossen ist. Diese Ausführungsform hat den Vorteil, dass eine möglichst große Bauhöhe als Förderhöhe genutzt werden kann, d. h. das Abscheidegut kann auch bei sehr tief angeordneten Zulaufrohren abgeschieden und entnommen werden. Nachteilig ist, dass ein geringer Teil der Umfangsfläche der Siebfläche für den Anschluss des Beschickungsbehälters verlorengeht und so zu Siebzwecken nicht genutzt werden kann.

Eine andere Ausführungsmöglichkeit besteht darin, dass der Beschickungsbehälter axial an die zylindrische Siebfläche angeschlossen ist. Damit bleibt die gesamte Umfangsfläche der zylindrischen Siebfläche nutzbar, und der Beschickungsbehälter wird in axialer Richtung mit der Siebvorrichtung verbunden, wobei gleichsam die unterste Stirnfläche der zylindrischen Siebfläche für diesen Zweck genutzt wird. Dabei geht etwas an Bauhöhe verloren. Da der Beschickungsbehälter aber ohnehin eine U-förmige Verbindung zum Innern der Siebvorrichtung aufweisen muss, lässt sich dieser Nachteil durchaus in Kauf nehmen, zumal er mit dem Vorteil verbunden ist, dass die Abscheidefläche infolge der symmetrischen Strömungsverhältnisse gleichmäßig mit Abscheidegut belegt wird.

Der Beschickungsbehälter kann einen mit der Atmosphäre verbundenen Notüberlauf aufweisen. Dieser Notüberlauf stellt zweckmäßig gleichzeitig die atmosphärische Verbindung des Beschickungsbehälters dar. Der Notüberlauf lässt einen Notbetrieb zu. Wenn beispielsweise die elektrische Versorgung des Antriebes der Förderschnecke ausfällt und sich die Siebfläche mit Abscheidegut zusetzt, kann das Abwasser ungereinigt in den Pumpensumpf übertreten, so dass ein Nachfluss durch das Zulaufrohr möglich ist.

Zwischen der Siebfläche und dem Gehäuse der Schneckenfördereinrichtung kann ein sich konisch verengendes Übergangsgehäuse vorgesehen sein. Auch über diesen Bereich erstreckt sich die Förderwendel der Schneckenfördereinrichtung. Das abgeschiedene und aufwärts geförderte Abscheidegut unterliegt in diesem Bereich bereits einer ersten Verdichtung. Zusätzlich kann die Schneckenfördereinrichtung eine Presszone aufweisen, die vorteilhaft in der Nähe des Auslaufes angeordnet ist. In dieser Presszone kann ein Widerlager für das hochgeförderte Abscheidegut angeordnet sein. Zweckmäßig ist es auch, in dem Gehäuse der Schneckenfördereinrichtung im Bereich der Presszone Durchbrechungen für den Durchtritt der ausgepressten Flüssigkeit vorzusehen.

Die Förderwendel der Schneckenfördereinrichtung kann in radialer Richtung nach unten geneigt auf der Welle angeordnet sein. Durch diese besondere Ausbildung kommt das Abscheidegut vermehrt mit der Wandung insbesondere der Schneckenfördereinrichtung in Kontakt, so dass hierdurch die Förderwirkung nach oben unterstützt bzw. verbessert wird.

Eine besonders vorteilhafte Ausführungsform der Siebvorrichtung besteht darin, dass die zylindrische Siebfläche aus zwei Halbschalen zusammengesetzt ist, zwischen denen negative Förderleisten gebildet sind. An den Enden der Halbschalen befinden sich Verbindungsflansche für den Angriff einer Schraubverbindung. Eingefügte Stäbe, die zudem noch radial nach außen versetzt angeordnet sind, schaffen Freiräume, sogenannte negative Förderleisten, die sich im Anschluss an den Innenraum erstrecken und in denen Abscheidegut bewegt wird. Dies wirkt sich auf das gesamte Abscheidegut im Bereich der Siebfläche so aus, dass die Förderwirkung begünstigt wird.

Das Gehäuse der Schneckenfördereinrichtung kann dagegen positive Förderleisten aufweisen. Bei diesen positiven Förderleisten handelt es sich um Leisten, die am inneren Umfang des Gehäuses der Schneckenfördereinrichtung angeordnet sind und an denen sich die Förderwendel der Förderschnecke unter Einhaltung eines Abstandes vorbeibewegt. Auch diese Förderleisten verhindern ein nutzloses Mitdrehen des Abscheidegutes auf der Förderwendel.

Die Welle der Schneckenfördereinrichtung kann als Rohr ausgebildet sein. Es ist sinnvoll, wenn die Welle der Schneckenfördereinrichtung auch im Bereich der Siebfläche durchgeht. Das untere Ende der Welle kann an dieser Stelle gelagert sein, insbesondere dann, wenn der Beschickungsbehälter radial an den Innenraum der Siebfläche angeschlossen ist.

Es kann ein Ablaufbehälter vorgesehen sein, der wesentliche Teile der Siebvorrichtung umgibt und zur Aufnahme der durch die Öffnungen der Siebfläche hindurchtretenden Flüssigkeit dient. Damit ist die Siebvorrichtung insbesonders für oberirdischen Einsatz geeignet. Es versteht sich, dass die Flüssigkeit aus dem Ablaufbehälter abgezogen wird. Auch der Beschickungsbehälter kann im wesentlichen innerhalb des Ablaufbehälters untergebracht sein.

Die Erfindung wird anhand verschiedener Ausführungsbeispiele weiter erläutert und beschrieben. Es zeigen:
- Fig. 1: eine teilweise geschnittene Ansicht einer ersten Ausführungsform der Siebvorrichtung,
- Fig. 2: eine zweite Ausführungsform der Siebvorrichtung,
- Fig. 3: eine dritte Ausführungsform der Siebvorrichtung im Schnitt,
- Fig. 4: eine vierte Ausführungsform der Siebvorrichtung,
- Fig. 5: einen Schnitt gemäß der Linie A-A in Fig. 4,
- Fig. 6: einen Schnitt gemäß der Linie B-B in Fig. 4,
- Fig. 7: ein Detail Z aus Fig. 6,
- Fig. 8: ein Detail X, und
- Fig. 9: eine weitere Ausführungsform der Siebvorrichtung.

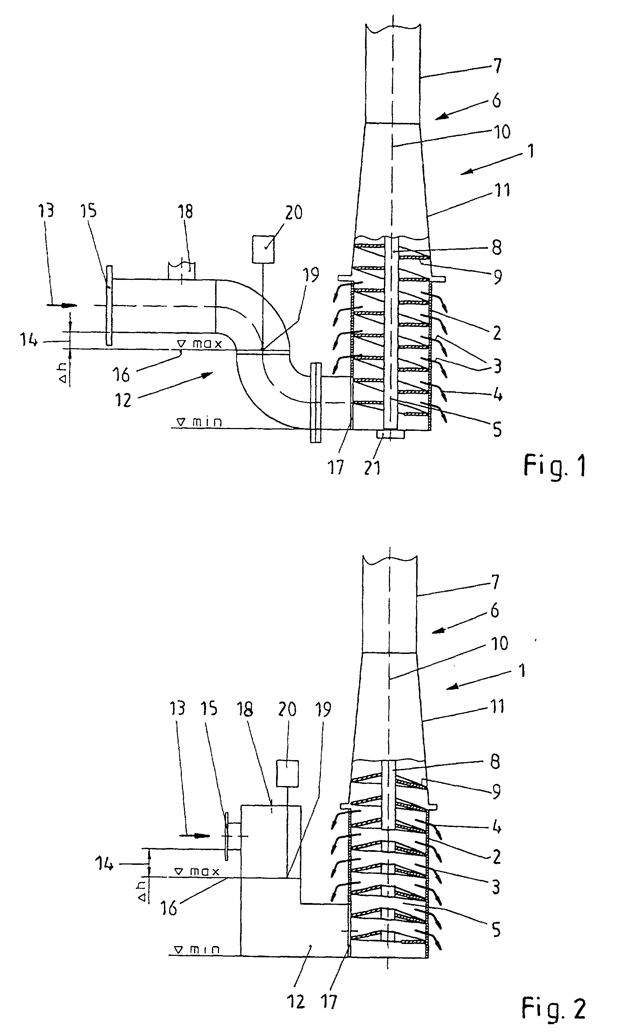

In Fig. 1 ist eine erste Ausführungsform der Siebvorrichtung 1 dargestellt. Wesentliche Bestandteile der Siebvorrichtung 1 ist eine zylindermantelförmige Siebfläche 2 mit Öffnungen 3, durch die Flüssigkeit 4 gemäß den angedeuteten Pfeilen hindurchtreten kann. Die Öffnungen 3 können über den gesamten Umfang der Zylindermantelförmigen Siebfläche 2 oder auch nur über einen Teil des Umfangs mit gleichen oder auch ungleichen Abständen verteilt angeordnet sein. Die Siebfläche 2 ist mit vertikaler Achse 5 angeordnet. Oberhalb der Siebfläche 2 befindet sich eine Schneckenfördereinrichtung 6 mit Gehäuse 7, Welle 8 und Förderwendel 9. Die Schneckenfördereinrichtung 6 weist eine Achse 10 auf, die ebenfalls vertikal angeordnet ist und mit der Achse 5 der Siebfläche 2 fluchtet. Es versteht sich, daß die Welle 8 mit der Förderwendel 9 nach oben durchgehend ausgebildet und angeordnet ist, obwohl dies in Fig. 1 nicht näher dargestellt ist. Am oberen Ende des Gehäuses 7 ist ein Motor für den Antrieb der Welle 8 vorgesehen. Die Welle 8 und die Förderwendel 9 erstrecken sich auch über den vertikalen Bereich der Siebfläche 2, so daß dort die Förderwendel 9 mit der inneren Oberfläche der Siebfläche 2 zusammenarbeitet. Die Siebvorrichtung kann zwischen der Siebfläche 2 und dem Gehäuse 7 ein konisches Übergangsgehäuse 11 aufweisen, in welchem die Förderwendel 9 entsprechend ausgebildet ist.

Ein wesentlicher Bestandteil der Siebvorrichtung 1 ist ein Beschickungsbehälter 12, der dem Innenraum der Siebfläche 2 vorgeschaltet ist und über den mit Abscheidestoffen belastetes, gemäß der Pfeildarstellung verdeutlichtes Abwasser 13 der Siebvorrichtung zugeführt wird. Der Beschickungsbehälter 12 kann nach Art eines Rohres (Fig. 1) oder auch nach Art eines Behälters (Fig. 2) ausgebildet und gestaltet sein. Wichtig ist, daß er eine Höhendifferenz 14 bereitstellt. Die Höhendifferenz 14 ergibt sich als Differenz zwischen der unteren Kante eines in Fig. 1 nicht dargestellten Zulaufrohres bzw. des Eingangsflansches 15 des Beschickungsbehälters 12 zu einem vorgesehenen maximalen Wasserspiegel 16 des Abwassers 13 im Beschickungsbehälter 12. Durch diese Höhendifferenz 14 wird ein Rückstau in dem Zulaufrohr verhindert, d. h. das einlaufende Abwasser 13 kann ohne einen solchen Rückstau immer in den Beschickungsbehälter 12 übertreten. Der Beschickungsbehälter 12, der hier aus verschiedenen Rohrstücken und Krümmern besteht, ist im unteren Bereich radial an die Siebfläche 2 angeschlossen. Zu diesem Zweck weist die Siebfläche 2 an dieser Stelle eine Durchbrechung 17 auf. Durch die Fläche dieser Durchbrechung 17 wird die nutzbare Siebfläche 2 verkleinert. Der Innenraum des Beschickungsbehälters 12 bildet mit dem Innenraum der Siebvorrichtung 1, der von der Siebfläche 2 umschlossen wird, eine U-förmige Verbindungsleitung, so daß das in den Beschickungsbehälter 12 eingeführte Abwasser 13 in den Innenraum der Siebfläche 2 übertritt. Der Beschickungsbehälter 12 weist einen Notüberlauf 18 auf, der zugleich eine Verbindung zur Atmosphäre darstellt. Der Notüberlauf 18 dient darüber hinaus dem Zweck, beispielsweise bei Stromausfall für den Antrieb der Schneckenfördereinrichtung 6 und der daraufhin erfolgenden Belegung der Siebfläche 2 das Abwasser 13 ungereinigt über die Vorrichtung hinwegzuführen.

Der maximale Wasserspiegel 16 wird von einer Sonde 19 überwacht, die zu einer Schalteinrichtung 20 gehört, die den Motor für den Antrieb der Schneckenfördereinrichtung schaltet. Sobald der maximale Wasserspiegel 16 im Beschickungsbehälter 12 erreicht wird, was infolge entsprechender Belegung der Siebfläche 2 geschieht, wird die Schneckenfördereinrichtung 6 eingeschaltet, und die Förderwendel 9 nimmt das Abscheidegut von der Siebfläche 2 ab und reinigt diese, so daß sie wieder vermehrt durchlässig für die Flüssigkeit 4 wird. Sobald der Wasserspiegel entsprechend gesunken ist, wird der Motor für den Antrieb der Schneckenfördereinrichtung 6 wieder ausgeschaltet. Es ist aber auch möglich, die Steuerung so auszubilden, daß der Motor noch eine gewisse Zeit weiterläuft.

Die Welle 8 und die Förderwendel 9 der Schneckenfördereinrichtung 6 sind nach unten durchgehend vorgesehen und erstrecken sich damit auch über den Bereich, der von der Siebfläche 2 umschlossen wird. Am unteren Ende ist ein Lager 21 für die Welle 8 vorgesehen.

Die Ausführungsform der Siebvorrichtung 1 gemäß Fig. 2 stimmt mit derjenigen gemäß Fig. 1 prinzipiell überein. Der Beschikkungsbehälter 12 ist hier lediglich gehäuseartig ausgebildet. Die Förderwendel 9 ist an der Welle 8 nach außen und unten geneigt angebracht, damit das Abscheidegut vermehrt in Kontakt mit der Siebfläche 2, dem Übergangsgehäuse 11 und dem Gehäuse 7 der Schneckenfördereinrichtung 6 kommt und so die Förderwirkung nach oben begünstigt wird. Aus den beiden Darstellungen der Fig. 1 und 2 ist erkennbar, daß die Siebfläche 2 den maximal vorgesehenen Wasserspiegel 16 nach oben überragt, obwohl sie im normalen Betrieb nur in einem unteren Bereich genutzt wird. Insoweit besitzt die Siebvorrichtung eine zusätzliche Sicherheit, bis die Funktion des Notüberlaufes 18 genutzt wird. Der Teil der Siebfläche 2, der oberhalb des maximalen Wasserspiegels 16 vorgesehen ist, besitzt ebenfalls die Öffnungen 3. Auch in diesem Bereich wird während des Hochförderns Flüssigkeit 4 durch die Öffnungen 3 hindurchtreten. Die Baueinheit aus Welle 8 und Förderwendel 9 ist hier im unteren Bereich wellenlos gestaltet. Die Welle 8 endet etwa auf der Höhe des Eingangsflansches 15 des Beschickungsbehälters 12. Auch hier wird erkennbar, daß die Durchbrechung 17 vollständig überströmbar ist.

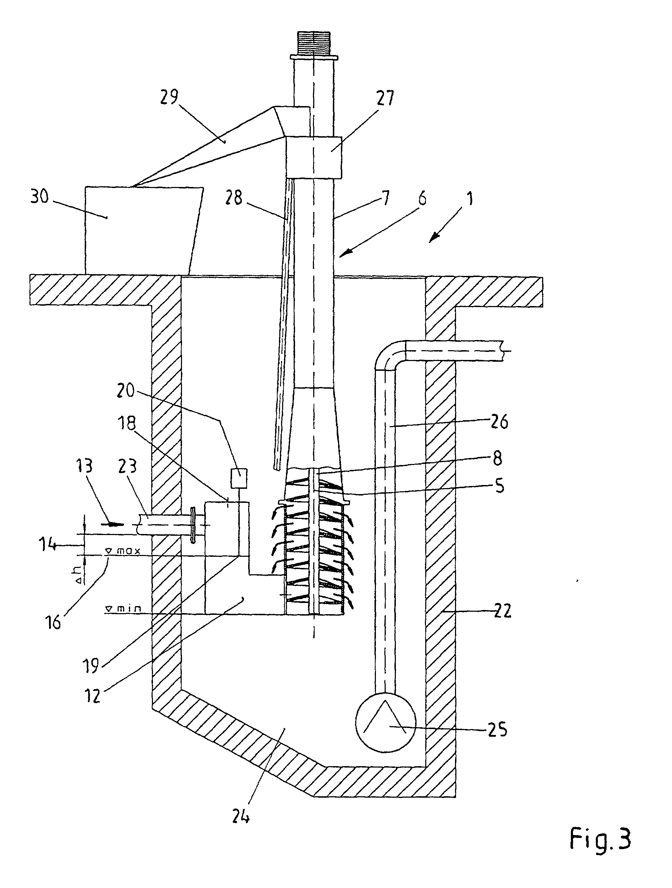

Fig. 3 zeigt eine mögliche Einbausituation der Siebvorrichtung 1 gemäß Fig. 2. Die Siebvorrichtung 1 einschließlich des Beschickungsbehälters 12 ist in einen Schacht 22 eingebaut und an ein dort endendes Zulaufrohr 23 angeschlossen. Der Schacht 22 bildet einen Pumpensumpf 24, in welchem sich die Flüssigkeit 4, die durch die Öffnungen 3 der Siebfläche 2 austritt, sammelt. Diese Flüssigkeit wird mit einer Pumpe 25 und einer Steigleitung 26 hinweggeführt. Das an der Siebfläche 2 abgeschiedene Abscheidegut wird dagegen von der Förderwendel 9 der Schneckenfördereinrichtung 6 erfaßt und nach oben geführt. Es durchläuft eine Preßzone 27 mit einer Rückführleitung 28, über die ausgepreßte Flüssigkeit ebenfalls in den Pumpensumpf 24 gelangt. Das Abscheidegut gelangt über eine Abwurfrutsche 29 in einen Container 30.

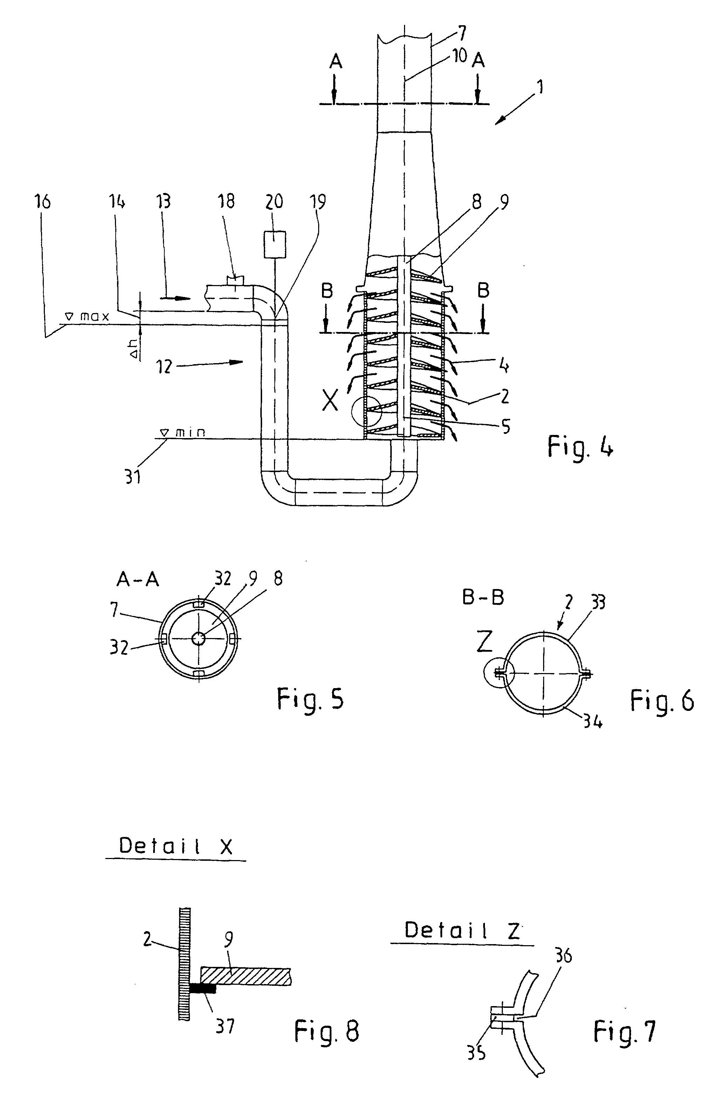

Die Ausführungsform der Siebvorrichtung 1 gemäß Fig. 4 stimmt in weiten Bereichen mit den bisher beschriebenen Ausführungsformen überein. Der maximale Wasserspiegel 16 ist hier vergleichsweise höher relativ zu der zylindermantelförmigen Siebfläche 2 angeordnet. Der minimale Wasserspiegel 31 liegt in Höhe der unteren Stirnfläche der Siebfläche 2. Der Beschickungsbehälter 12 wird hier von Rohrleitungsstücken und Krümmern gebildet. Er ist in axialer Richtung an die Siebfläche 2 angeschlossen, so daß eine über den Umfang gleichmäßige Beaufschlagung der Siebfläche 2 eintritt. Die Siebfläche 2 bildet hier einen Siebkorb, der vollständig über 360° seines Umfangs genutzt werden kann.

Fig. 5 zeigt einen Schnitt durch das Gehäuse 7 der Schneckenfördereinrichtung 6. Auf der Innenseite des Gehäuses 7 sind Förderleisten 32 angeordnet, die mit der Förderwendel 9 der Schneckenfördereinrichtung 6 zusammenarbeiten. Die Größenverhältnisse sind in Fig. 5 stark übertrieben dargestellt.

Fig. 6 zeigt einen Schnitt durch die Siebfläche 2, wobei die Ausbildung in Fig. 7 noch verdeutlicht ist. Die Siebfläche 2 besteht hier aus zwei Halbschalen 33 und 34, die miteinander durch Schraubverbindungen verbunden sind. An der Verbindungsstelle sind Stäbe 35 eingeschaltet, so daß im Anschluß an die innere Oberfläche der Siebfläche 2 negative Förderleisten 36, also leistenartige Freiräume gebildet werden, in die Abscheidegut eindringen kann, welches damit an einer Drehung in Umfangsrichtung gehindert wird. Dies unterstützt die Aufwärtsförderung des Abscheidegutes.

Fig. 8 zeigt ein Detail im Bereich der inneren Oberfläche der Siebfläche 2 und der Förderwendel 9. Die Förderwendel 9 weist radial außen eine angesetzte Bürste 37 auf, die unter Kontakt an der Innenfläche der Siebfläche 2 entlangstreicht. Statt der Bürste 37 kann auch eine Leiste Verwendung finden. Diese Reinigungselemente sind austauschbar an der Förderwendel 9 vorgesehen, und zwar im Bereich der Siebfläche 2.

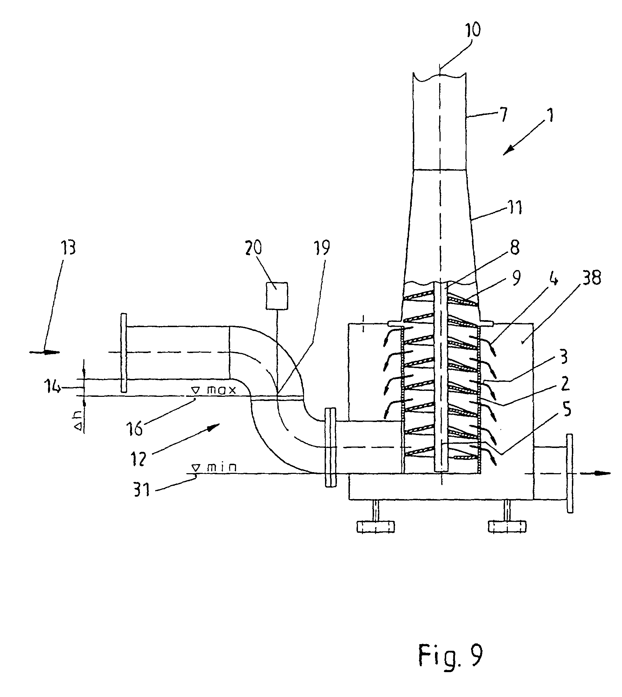

Fig. 9 zeigt eine Ausführungsform der Siebvorrichtung 1, wie sie bei oberirdischer Aufstellung bei beengten Platzverhältnissen Anwendung findet. Der Beschickungsbehälter 12 in Form einer Rohrleitung ist hier durch einen Ablaufbehälter 38 hindurchgeführt, in welchem die Siebvorrichtung 1 mit ihrer Siebfläche 2 angeordnet ist. Der Ablaufbehälter 38 dient dem Auffangen der Flüssigkeit 4, welches durch die Öffnungen 3 der Siebfläche 2 hindurchtritt. Der Beschickungsbehälter 12 ist hier radial an die Siebfläche 2 angeschlossen.

### BEZUGSZEICHENLISTE

- 1 -: Siebvorrichtung
- 2 -: Siebfläche
- 3 -: Öffnung
- 4 -: Flüssigkeit
- 5 -: Achse
- 6 -: Schneckenfördereinrichtung
- 7 -: Gehäuse
- 8 -: Welle
- 9 -: Förderwendel
- 10 -: Achse
- 11 -: Übergangsgehäuse
- 12 -: Beschickungsbehälter
- 13 -: Abwasser
- 14 -: Höhendifferenz
- 15 -: Eingangsflansch
- 16 -: Wasserspiegel
- 17 -: Durchbrechung
- 18 -: Notüberlauf
- 19 -: Sonde
- 20 -: Schalteinrichtung
- 21 -: Lager
- 22 -: Schacht
- 23 -: Zulaufrohr
- 24 -: Pumpensumpf
- 25 -: Pumpe
- 26 -: Steigleitung
- 27 -: Preßzone
- 28 -: Rückführleitung
- 29 -: Abwurfrutsche
- 30 -: Container
- 31 -: Wasserspiegel
- 32 -: Förderleiste
- 33 -: Halbschale
- 34 -: Halbschale
- 35 -: Stab
- 36 -: Förderleiste
- 37 -: Bürste
- 38 -: Ablaufbehälter

## Patentansprüche

1. Siebvorrichtung, insbesondere für den Einbau in Pumpschächten, mit einem Anschluss für in einem Zulaufrohr (23) ankommendes Abwasser (13), mit einer über den Umfang gehäuseartig geschlossenen zylindrischen Siebfläche (2) zum Abscheiden von Abscheidegut, die über den Zylinderumfang verteilt angeordnete Öffnungen (3) aufweist, sowie mit einer Einrichtung zum Herausfördern des Abscheidegutes nach oben in Form einer mit in Gebrauchsstellung vertikaler Achse (10) angeordneten Schneckenfördereinrichtung (6) mit einer über einen Motor angetriebenen Welle (8), einer darauf angeordneten Förderwendel (9) und einem rohrförmigen Gehäuse (7), an das die zylindrische Siebfläche (2) dichtend angeschlossen ist, **dadurch gekennzeichnet, dass** die Siebfläche (2) mit ihrer Achse (5) fluchtend zu der vertikal anzuordnenden Achse (10) der Schneckenfördereinrichtung (6) angeordnet ist, dass die Siebvorrichtung einen der zylindrischen Siebfläche (2) vorgeschalteten Beschickungsbehälter (12) aufweist, der mit seinem Anschluss sowohl an das Ende des Zulaufrohres (23) anschließbar ist als auch an eine Durchbrechung der Siebfläche (2) angeschlossen ist, die im unteren Bereich der Siebfläche (2) in radialer Richtung oder stirnseitig in axialer Richtung der Siebfläche angeordnet ist, dass in Gebrauchsstellung der Anschluss zwischen dem Zulaufrohr (23) und dem Beschickungsbehälter (12) höher angeordnet ist als der Anschluss zwischen dem Beschickungsbehälter (12) und der Siebfläche (2), und dass der Beschickungsbehälter (12) eine Verbindung zur Atmosphäre besitzt, so dass im normalen Betrieb einerseits eine positive Höhendifferenz (14) zwischen der Sohle des Zulaufrohres (23) und dem maximalen Wasserspiegel (16) in dem Beschickungsbehälter (12) bereitgestellt wird und andererseits ein freier Auslauf der Flüssigkeit (4) des Abwassers (13) durch die Siebfläche (2) aufgrund eines natürlichen Gefälles ermöglicht wird und die Durchbrechung (17) zumindest von Zeit zu Zeit immer wieder überströmt und so das Abwasser mit dem Abscheidegut in die über den Umfang gehäuseartig geschlossene Siebfläche (2) eingeschwemmt wird.

2. Siebvorrichtung nach Anspruch 1, **dadurch gekennzeichnet, dass** die Welle (8) und die Förderwendel (9) der Schneckenfördereinrichtung (6) auch innerhalb der zylindrischen Siebfläche (2) ganz oder teilweise durchgehend vorgesehen sind.

3. Siebvorrichtung nach Anspruch 1 oder 2, **dadurch gekennzeichnet, daß** die Förderwendel (9) im Bereich der zylindrischen Siebfläche (2) außen mit einer Bürste (37) oder einer Leiste versehen ist.

4. Siebvorrichtung nach Anspruch 1 bis 3, **dadurch gekennzeichnet, daß** der Beschickungsbehälter (12) radial an die zylindrische Siebfläche (2) angeschlossen ist.

5. Siebvorrichtung nach Anspruch 1 bis 3, **dadurch gekennzeichnet, daß** der Beschickungsbehälter (12) axial an die zylindrische Siebfläche (2) angeschlossen ist.

6. Siebvorrichtung nach Anspruch 1, **dadurch gekennzeichnet, daß** der Beschickungsbehälter (12) einen mit der Atmosphäre verbundenen Notüberlauf (18) aufweist.

7. Siebvorrichtung nach einem der Ansprüche 1 bis 6, **dadurch gekennzeichnet, daß** zwischen der Siebfläche (2) und dem Gehäuse (7) der Schneckenfördereinrichtung (6) ein sich konisch verengendes Übergangsgehäuse (11) vorgesehen ist.

8. Siebvorrichtung nach einem der Ansprüche 1 bis 7, **dadurch gekennzeichnet, daß** die Förderwendel (9) der Schneckenfördereinrichtung (6) in radialer Richtung nach unten geneigt auf der Welle (8) angeordnet ist.

9. Siebvorrichtung nach einem der Ansprüche 1 bis 8, **dadurch gekennzeichnet, daß** die zylindrische Siebfläche (2) aus zwei Halbschalen (33, 34) zusammengesetzt ist, zwischen denen negative Förderleisten (36) gebildet sind.

10. Siebvorrichtung nach einem der Ansprüche 1 bis 9, **dadurch gekennzeichnet, daß** das Gehäuse (7) der Schneckenfördereinrichtung (6) positive Förderleisten (32) aufweist.

11. Siebvorrichtung nach einem der Ansprüche 1 bis 10, **dadurch gekennzeichnet, daß** die Welle (8) der Schneckenfördereinrichtung (6) als Rohr ausgebildet ist.

12. Siebvorrichtung nach einem der Ansprüche 1 bis 11, **dadurch gekennzeichnet, daß** ein Ablaufbehälter (38) vorgesehen ist, der wesentliche Teile der Siebvorrichtung umgibt und zur Aufnahme der durch die Öffnungen (3) der Siebfläche (2) hindurchtretenden Flüssigkeit dient.

## Claims

1. A screening apparatus, especially for installation in pump pits, including a connection for sewage (13) arriving in a supply tube (23), a cylindrical screen surface (2) for depositing deposit material, the screen surface (2) being closed about the circumference like a housing, the screen surface (2) including openings (3) being distributed about the circumference of the cylinder, and an assembly for conveying the deposit material out in an upward direction, the assembly being designed as a conveyor screw assembly (6), the conveyor screw assembly (6) being arranged to have a vertical axis (10) in the working position, the conveyor screw assembly (6) including an shaft (8) being driven by a motor, a conveyor helix (9) being arranged on the shaft (8) and a tube-like housing (7), the cylindrical screen surface (2) being sealingly connected thereto, **characterised in that** the screen surface (2) with its axis (5) is arranged to be aligned with the axis (10) of the conveyor screw assembly (6) to be vertically arranged, that the screening apparatus includes a charging container (12) being located upstream of the cylindrical screen surface (2), the charging container (12) with its connection being connectable to the end of the supply tube (23) and being connected to an opening of the screen surface (2), the opening being arranged in the lower portion of the screen surface (2) in a radial direction or at the front in an axial direction of the screen surface (2), that the connection between the supply tube (23) and the charging container (12) in the working position is located at a higher level than the connection between the charging container (12) and the screen surface (2), and that the charging container (12) is connected to the atmosphere such that during normal operation, on the one hand, a height difference (14) between the bottom of the supply tube (23) and the maximum water level (16) in the charging container (12) is provided, and, on the other hand, a free outlet of the liquid (4) of the sewage (13) through the screen surface (2) due to a natural head is realised and the opening (17) is repeatedly overflown at least from time to time such that the sewage with the deposit material is washed into the screen surface (2) being closed about the circumference like a housing.

2. The screening apparatus of claim 1, **characterised in that** the shaft (8) and the conveyor helix (9) of the conveyor screw assembly (6) are also provided to be completely or partly continuous within the cylindrical screen surface (2).

3. The screening apparatus of claim 1 or 2, **characterised in that** the conveyor helix (9) in the region of the cylindrical screen surface (2) externally includes a brush (37) or a strip.

4. The screening apparatus of claims 1 to 3, **characterised in that** the charging container (12) is radially connected to the cylindrical screen surface (2).

5. The screening apparatus of claims 1 to 3, **characterised in that** that the charging container (12) is axially connected to the cylindrical screen surface (2).

6. The screening apparatus of claim 1, **characterised in that** the charging container (12) includes an emergency outlet (18) being connected to the atmosphere.

7. The screening apparatus of at least one of claims 1 to 6, **characterised in that** a transition housing (11) diminishing in a conical way is provided between the screen surface (2) and the housing (7) of the conveyor screw assembly (6).

8. The screening apparatus-of-at-leastone of claims 1 to 7, **characterised in that** the conveyor helix (9) of the conveyor screw assembly (6) is arranged on the shaft (8) in a radial direction and downwardly declined.

9. The screening apparatus of at least one of claims 1 to 8, **characterised in that** the cylindrical screen surface (2) is composed of two semi shells (33, 34) between which negative conveyor strips (36) are formed.

10. The screening apparatus of at least one of claims 1 to 9, **characterised in that** the housing (7) of the conveyor screw assembly (6) includes positive conveyor strips (32).

11. The screening apparatus of at least one of claims 1 to 10, **characterised in that** the shaft (8) of the conveyor screw assembly (6) is designed as a tube.

12. The screening apparatus of at least one of claims 1 to 11, **characterised in that** a drain off container (38) is provided, the drain off container (38) surrounding substantial parts of the screening apparatus and serving to collect the liquid passing through the openings (3) of the screen surface (2).

## Revendications

1. Dispositif de tamisage, destiné à être monté en particulier dans des puits de pompage, comportant un raccord pour les eaux usées (13) provenant d'un tube d'arrivée (23), comportant une surface de tamisage (2) cylindrique fermée périphériquement de type boîtier, pour la séparation d'un produit à séparer, laquelle comporte des orifices (3) répartis sur la périphérie du cylindre, et comportant aussi un dispositif pour extraire le produit à séparer vers le haut, sous la forme d'un dispositif de transport à vis sans fin (6) disposé avec axe vertical (10) en position d'utilisation, avec un arbre (8) entraîné par un moteur, une spire de transport (9) disposée dessus et un boîtier (7) de forme tubulaire auquel est raccordée, de manière étanche, la surface de tamisage (2) cylindrique, **caractérisé en ce que** la surface de tamisage (2) est disposée de manière que son axe (5) soit aligné avec l'axe (10) à disposer verticalement du dispositif de transport à vis sans fin (6), le dispositif de tamisage comporte un récipient de chargement (12) situé en amont de la surface de tamisage (2) cylindrique, lequel, par son raccord, peut aussi bien être raccordé à l'extrémité du tube d'arrivée (23) qu'il est raccordé à un ajour de la surface de tamisage (2), lequel est disposé dans la zone inférieure de la surface de tamisage (2) dans la direction radiale ou à l'extrémité dans la direction axiale de la surface de tamisage, **en ce qu'**en position d'utilisation, le raccord entre le tube d'arrivée (23) et le récipient de chargement (12) est disposé plus haut que le raccord entre le récipient de chargement (12) et la surface de tamisage (2), et **en ce que** le récipient de chargement (12) possède une liaison avec l'atmosphère, de sorte qu'en fonctionnement normal il se produit d'une part une différence de hauteur positive (14) entre la semelle du tube d'arrivée (23) et le niveau d'eau maximal (16) dans le récipient de chargement (12), et d'autre part un écoulement libre du liquide (4) des eaux usées (13) à travers la surface de tamisage (2) est rendu possible en raison d'une pente naturelle, et l'ajour (17) est à nouveau recouvert par le courant au moins de temps à autre, de sorte que les eaux usées avec le produit à séparer sont emportées dans la surface de tamisage (2) fermée périphériquement de type boîtier.

2. Dispositif de tamisage selon la revendication 1, **caractérisé en ce que** l'arbre (8) et la spire de transport (9) du dispositif de transport à vis sans fin (6) sont également prévus entièrement ou en partie d'un bout à l'autre à l'intérieur de la surface de tamisage (2) cylindrique.

3. Dispositif de tamisage selon la revendication 1 ou 2, **caractérisé en ce que** la spire de transpôrt (9) est pourvue dans la zone de la surface de tamisage (2) cylindrique à l'extérieur, d'une brosse (37) ou d'une barre.

4. Dispositif de tamisage selon les revendications 1 à 3, **caractérisé en ce que** le récipient de chargement (12) est raccordé radialement à la surface de tamisage (2) cylindrique.

5. Dispositif de tamisage selon les revendications 1 à 3, **caractérisé en ce que** le récipient de chargement (12) est raccordé axialement à la surface de tamisage (2) cylindrique.

6. Dispositif de tamisage selon la revendication 1, **caractérisé en ce que** le récipient de chargement (12) comporte un trop-plein de secours (18) relié à l'atmosphère.

7. Dispositif de tamisage selon l'une des revendications 1 à 6, **caractérisé en ce qu'**entre la surface de tamisage (2) et le boîtier (7) du dispositif de transport à vis sans fin (6) est prévu un boîtier de transition (11) se rétrécissant coniquement.

8. Dispositif de tamisage selon l'une des revendications 1 à 7, **caractérisé en ce que** la spire de transport (9) du dispositif de transport à vis sans fin (6) est disposée inclinée vers le bas dans la direction radiale, sur l'arbre (8).

9. Dispositif de tamisage selon l'une des revendications 1 à 8, **caractérisé en ce que** la surface de tamisage (2) cylindrique est composée de deux demi-coques (33, 34) entre lesquelles sont formées des barres de transport (36) négatives.

10. Dispositif de tamisage selon l'une des revendications 1 à 9, **caractérisé en ce que** le boîtier (7) du dispositif de transport à vis sans fin (6) comporte des barres de transport (32) positives.

11. Dispositif de tamisage selon l'une des revendications 1 à 10, **caractérisé en ce que** l'arbre (8) du dispositif de transport à vis sans fin (6) est conformé en tube.

12. Dispositif de tamisage selon l'une des revendications 1 à 11, **caractérisé en ce qu'**est prévu un récipient d'écoulement (38) qui entoure des parties essentielles du dispositif de tamisage et qui sert à recevoir le liquide traversant les orifices (3) de la surface de tamisage (2).
